# EUROPEAN PATENT APPLICATION

(11) **EP 4 530 326 A1**
(43) Date of publication of application: **02.04.2025**
(21) Application number: 23811560.4
(22) Date of filing: 28.04.2023
(51) Int. Cl.: C09D 127/12, C09D 201/00, C09D 7/61, C09D 7/63, C09D 7/65

(54) **WATER-BASED FLUORORESIN COATING MATERIAL, WATER-BASED FLUORORESIN COATING FILM, AND METHOD FOR FORMING WATER-BASED FLUORORESIN COATING FILM**

(30) Priority: 23.05.2022 JP 2022083968
(71) Applicant: NTT Advanced Technology Corporation, Tokyo 163-1436 (JP)
(72) Inventor: SAWADA Takashi, Tokyo 163-1436 (JP); FUJINE Yusuke, Tokyo 163-1436 (JP); NOZAWA Kazuhiko, Tokyo 163-1436 (JP); WATANUKI Yoshikazu, Tokyo 163-1436 (JP); SHIMIZU Takeshi, Tokyo 163-1436 (JP)
(74) Representative: Brevalex
(86) International application number: PCT/JP2023/016890
(87) International publication number: WO 2023/228682

(57) **Abstract**

There are provided an water-based fluorine resin paint which is an water-based paint and has excellent water repellency and weather resistance, an water-based fluorine resin coating film, and a method of forming an water-based fluorine resin coating film. The water-based fluorine resin paint includes a solute containing a fluorine resin powder, a binder, a fluorine-based oil, titanium dioxide, and a film-forming assistant, and an water-based solvent containing at least one of water and a water-soluble organic solvent.

## Description

### TECHNICAL FIELD

The present invention relates to an water-based fluorine resin paint, an water-based fluorine resin coating film, and a method of forming an water-based fluorine resin coating film.

Priority is claimed on Japanese Patent Application No. 2022-083968, filed May 23, 2022, the content of which is incorporated herein by reference.

### BACKGROUND ART

Fluorine resin coating films have excellent weather resistance, and are used in a wide range of fields, including architecture, automobiles and the like. Most conventional fluorine resin paints used to form such fluorine resin coating films are one-component paints that use copolymers of fluoroolefins and various hydrocarbons. In addition, two-component fluorine resin paints which mainly contain tetrafluoroethylene or vinylidene fluoride as a main component and are mixed with a special acrylic resin are also known.

However, all of these fluorine resin paints have low water repellency, and the contact angle of the formed coating film with respect to water is about 80 degrees. Therefore, fluorine resin paints with improved water repellency are also known (for example, refer to Patent Document 1).

On the other hand, in recent years, fluorine resin coating films which contain titanium dioxide powder having a photocatalytic effect, decompose dust such as organic substances adhered to the surface into carbon dioxide and water when irradiated with ultraviolet rays, and thus can maintain functions such as contamination resistance for a long period are also known (for example, refer to Patent Document 2).

Incidentally, in recent years, as the paints used for such coating, water-based paints have been increasingly used. For paints that use a non-water-based organic solvent as a solvent, there are concerns about flammability when the organic solvent is volatilized and also concerns about the impact of volatile gases from the organic solvent on the environment and human body.

In addition, there are many regulations regarding the transportation of paints by aircraft, and paints that use non-water-based organic solvents are classified as dangerous substances, and thus require special transportation procedures. Therefore, non-water-based paints that use organic solvents have a problem of excessively high transportation costs.

### Citation List

### Patent Document

Patent Document 1: Japanese Unexamined Patent Application, First Publication No. H06-122838
Patent Document 1: Japanese Unexamined Patent Application, First Publication No. H10-088061

### SUMMARY OF INVENTION

### Technical Problem

Regarding fluorine resin paints, there is a demand for water-based fluorine resin paints that use an water-based solvent as a solvent, are not classified as dangerous substances, and of which contamination resistance does not decrease over time.

The invention has been proposed in view of the above problems, and an object of the invention is to provide an water-based fluorine resin paint which is an water-based paint and has excellent water repellency and weather resistance, an water-based fluorine resin coating film, and a method of forming an water-based fluorine resin coating film. Solution to Problem

In view of the above background, the inventors examined water-based fluorine resin paints that have excellent water repellency and use an water-based solvent as a solvent, and found a new water-based fluorine resin paint which has a water contact angle of 140 degrees or more and high water repellency in a four-component coating film obtained by dispersing and applying a fluorine resin powder in a binder, and also has excellent weather resistance when immersed in water for a long period.
(1) An water-based fluorine resin paint according to Aspect 1 of the present invention includes a solute containing a fluorine resin powder, a binder, a fluorine-based oil, titanium dioxide, and a film-forming auxikiary agent, and an water-based solvent containing at least one of water and a water-soluble organic solvent.
(2) In Aspect 2 of the present invention, the film-forming auxikiary agent may include 2,2,4-trimethyl-1,3-pentanediol 1-isobutyrate in the water-based fluorine resin paint according to Aspect 1.
(3) In Aspect 3 of the present invention, the titanium dioxide may have an anatase crystal form or a rutile crystal form having a photocatalytic effect in the water-based fluorine resin paint according to Aspect 1 or 2.
(4) In Aspect 4 of the present invention, the fluorine-based oil may contain at least one of a perfluoropolyether, a perfluoroalkyl polyether, and a trifluoroethylene polymer, in the water-based fluorine resin paint according to any one of Aspects 1 to 3.
(5) In Aspect 5 of the present invention, the fluorine resin powder may have terminal groups that are partially or completely fluorinated, in the water-based fluorine resin paint according to any one of Aspects 1 to 4.
(6) In Aspect 6 of the present invention, the fluorine resin powder may include one, two or more powders selected from the group consisting of a tetrafluoroethylene resin powder, a tetrafluoroethylene-hexafluoropropylene copolymer resin powder, and a polyvinyl fluoride resin powder, in the water-based fluorine resin paint according to any one of Aspects 1 to 5.
(7) In Aspect 7 of the present invention, the binder may contain at least one of an emulsion-based fluoroethylene and a vinyl ether resin, in the water-based fluorine resin paint according to any one of Aspects 1 to 6.
(8) In Aspect 8 of the present invention, the fluorine-based oil may be a material having a larger surface free energy than the fluorine resin powder, in the water-based fluorine resin paint according to any one of Aspects 1 to 7.
(9) An water-based fluorine resin coating film of Aspect 9 of the present invention is a coating film containing a fluorine resin powder, a binder, a fluorine-based oil, titanium dioxide, and a film-forming auxikiary agent.
(10) In Aspect 10 of the present invention, the film-forming auxikiary agent may include 2,2,4-trimethyl-1,3-pentanediol 1-isobutyrate, in the water-based fluorine resin coating film according to Aspect 9.
(11) In Aspect 11 of the present invention, the titanium dioxide may have an anatase crystal form or a rutile crystal form having a photocatalytic effect, in the water-based fluorine resin coating film according to Aspect 9 or 10.
(12) In Aspect 12 of the present invention, the fluorine-based oil may contain at least one of a perfluoropolyether, a perfluoroalkyl polyether, and a trifluoroethylene polymer, in the water-based fluorine resin coating film according to any one of Aspects 9 to 11.
(13) In Aspect 13 of the present invention, the fluorine resin powder may have terminal groups that are partially or completely fluorinated, in the water-based fluorine resin coating film according to any one of Aspects 9 to 12.
(14) In Aspect 14 of the present invention, the fluorine resin powder may include one, two or more powders selected from the group consisting of a tetrafluoroethylene resin powder, a tetrafluoroethylene-hexafluoropropylene copolymer resin powder, and a polyvinyl fluoride resin powder, in the water-based fluorine resin coating film according to any one of Aspects 9 to 13.
(15) In Aspect 15 of the present invention, the binder may contain at least one of an emulsion-based fluoroethylene and a vinyl ether resin, in the water-based fluorine resin coating film according to any one of Aspects 9 to 14.
(16) In Aspect 16 of the present invention, the fluorine-based oil may be a material having a larger surface free energy than the fluorine resin powder, in the water-based fluorine resin coating film according to any one of Aspects 9 to 14.
(17) A method of forming an water-based fluorine resin coating film of Aspect 17 of the present invention includes a coating step in which the water-based fluorine resin paint is applied to an object to be coated; a pre-drying step in which the solvent contained in the applied water-based fluorine resin paint is evaporated to form a dry coating film; a wetting step in which the dry coating film is impregnated with water to form a wet coating film; and a re-drying step in which the water contained in the wet coating film is evaporated to obtain an water-based fluorine resin coating film, in the method of forming an water-based fluorine resin coating film according to any one of (9) to (16).

### Advantageous Effects of Invention

According to the present invention, it is possible to provide an water-based fluorine resin paint which is an water-based paint and has excellent water repellency and weather resistance, an water-based fluorine resin coating film, and a method of forming an water-based fluorine resin coating film.

### BRIEF DESCRIPTION OF DRAWINGS

[FIG. 1] A flowchart showing steps of a method of forming an water-based fluorine resin coating film of the present embodiment.
[FIG. 2] A graph showing the results of Verification Example 2.
[FIG. 3] A graph showing the results of Verification Example 3.
[FIG. 4] A graph showing cycle conditions in Verification Example 4.

### DESCRIPTION OF EMBODIMENTS

Hereinafter, an water-based fluorine resin paint, an water-based fluorine resin coating film, a method of producing an water-based fluorine resin paint, and a method of forming an water-based fluorine resin coating film according to one embodiment of the present invention will be described with reference to the drawings. Here, the following embodiments will be described in detail to allow better understanding of the spirit of the present invention, and do not limit the present invention unless otherwise specified. In addition, in the drawings used in the following description, in order to facilitate understanding of features of the present invention, feature parts are enlarged for convenience of illustration in some cases, and dimensional ratios of components are not actually necessarily the same.

### (Water-based fluorine resin paint)

An water-based fluorine resin paint according to one embodiment of the present invention will be described.

The water-based fluorine resin paint of the present embodiment is an water-based paint, and the water-based fluorine resin paint contains a solute containing a fluorine resin powder, a binder, a fluorine-based oil, titanium dioxide, and a film-forming auxikiary agent, and an water-based solvent containing at least one of water and a water-soluble organic solvent, and the solute is dispersed (dissolved) in the solvent.

For the fluorine resin powder constituting the solute of the water-based fluorine resin paint, a resin whose terminal groups are partially or completely substituted with fluorine atoms can be used. Specific examples of fluorine resin powders include a tetrafluoroethylene resin powder, a tetrafluoroethylene-hexafluoropropylene copolymer resin powder, and a polyvinyl fluoride resin powder. These fluorine resin powders may be used alone or a plurality of types of fluorine resin powders may be used in combination.

The binder constituting the solute of the water-based fluorine resin paint may be, for example, at least one of an emulsion-based fluoroethylene and a vinyl ether resin or a mixture of them.

For the fluorine-based oil constituting the solute of the water-based fluorine resin paint, it is preferable to use a material having a larger surface free energy than the fluorine resin powder. Specific examples of fluorine-based oils include those containing at least one of a perfluoropolyether, a perfluoroalkyl polyether, and a trifluoroethylene polymer, and mixtures of a plurality thereof. Among these, examples of surface free energy (mN/m) according to the molecular weight of perfluoropolyether are shown in Table 1.

**[Table 1]**

| Type | Additive name | Surface free energy (mN/m) |
|---|---|---|
| Fluorine-based oil | Perfluoropolyether (molecular weight: 2,700) | 17.7 |
| | Perfluoropolyether (molecular weight: 4,500) | 18.0 |
| | Perfluoropolyether (molecular weight: 5,600) | 18.5 |
| | Perfluoropolyether (molecular weight: 8,400) | 19.1 |

The titanium dioxide constituting the solute of the water-based fluorine resin paint may be titanium dioxide powder having an anatase crystal form or a rutile crystal form having a photocatalytic effect.

For the film-forming auxikiary agent constituting the solute of the water-based fluorine resin paint, for example, 2,2,4-trimethyl-1,3-pentanediol 1-isobutyrate (Texanol) can be used.

As the solvent of the water-based fluorine resin paint, an water-based solvent, for example, water or a water-soluble organic solvent added to water can be used. As the water-soluble organic solvent, a lower alcohol such as methanol, ethanol, or propanol can be used. As the water-based solvent, it is particularly preferable to use water in order to reduce flammability. As water, low-cost tap water or distilled water can be used.

The water-based fluorine resin paint of the present embodiment is obtained by dispersing (dissolving) the solute having the above composition in an water-based solvent.

As described above, in the water-based fluorine resin paint of the present embodiment, an water-based solvent is used as the solvent, and thus even though it is a fluorine resin paint, there is no concern about flammability due to volatilization of the organic solvent or concern about the impact of volatile gases from the organic solvent on the environment and human body, and it is possible to provide a fluorine resin paint with excellent safety. Thus, when an water-based solvent is used as the solvent, for example, the paint is not classified as a dangerous substance when transported by aircraft, but is handled as general cargo, which can reduce transportation costs and makes it possible to provide the paint at a low cost.

### (Water-based fluorine resin coating film)

The water-based fluorine resin coating film of the present embodiment is a coating film obtained by applying the water-based fluorine resin paint having the above composition to an object to be coated and drying it to volatilize the solvent. That is, the water-based fluorine resin coating film of the present embodiment is a coating film containing a fluorine resin powder, a binder, a fluorine-based oil, titanium dioxide, and a film-forming auxikiary agent.

When used outdoors, although the surface of a conventional fluorine resin coating film has excellent initial water repellency, an exhaust gas, sand dust, powder dust and the like adhere to the surface of the coating film, and over the long term, the water repellency deteriorates over time. On the other hand, the water-based fluorine resin coating film of the present embodiment described above can decompose dust on the fluorine resin coating film.

In addition, in a conventional coating film in which a titanium dioxide powder is added to a paint, the strong reaction of the titanium dioxide causes the coating film itself to decompose and chalk, but the water-based fluorine resin coating film of the present embodiment is composed of a fluorine resin powder, a binder, and a fluorine-based oil, all of which are fluorine materials, as constituent materials, and due to a strong bonding force between fluorine and other elements (C-F bond energy: 116 kcal/mol), these compositions are not decomposed even with titanium dioxide, and only dust adhered to the surface is decomposed.

That is, when titanium dioxide is dispersed in a binder, the surface of the coating film is exposed to ultraviolet rays contained in sunlight, the binder itself is decomposed (chalked) by the photocatalytic effect of titanium dioxide, dust adhered to the surface of the coating film and the coating film itself are washed away by rain and wind, and while the coating film remains, a new surface is always exposed, and thus it is possible to realize an water-based fluorine resin coating film that maintains its antifouling properties for a long period.

In addition, since the fluorine-based oil used is a material having a larger surface free energy than the fluorine resin powder, the gaps between individual fluorine resin powder particles are filled with the fluorine-based oil, the occurrence of gaps that cause a change (deteriorate) in water repellency over time can be minimized, and an water-based fluorine resin coating film that can prevent water repellency from deteriorating for a long period can be realized.

### (Method of producing water-based fluorine resin paint)

In a method of producing an water-based fluorine resin paint of the present embodiment, the paint is produced through a dispersion step in which a solute containing a fluorine resin powder, a binder, a fluorine-based oil, titanium dioxide, and a film-forming auxikiary agent is diluted with a solvent and the solute is then uniformly dispersed in the solvent.

Specifically, solutes containing a fluorine resin powder, a binder, a fluorine-based oil, titanium dioxide, and a film-forming auxikiary agent are diluted with tap water and a small amount of ethanol as the water-based solvent, these solutes are gradually added and premixed, the solutes are then dispersed in the solvent by any stirring unit, and thus an water-based fluorine resin paint can be produced.

In this manner, according to the method of producing an water-based fluorine resin paint of the present embodiment, when the solute is uniformly dispersed in the solvent, five solute components including a fluorine resin powder, a binder, a fluorine-based oil, titanium dioxide, and a film-forming auxikiary agent are uniformly dispersed in the water-based solvent, and thus an water-based fluorine resin paint having a uniform composition and no bias in properties can be produced.

### (Method of forming water-based fluorine resin coating film)

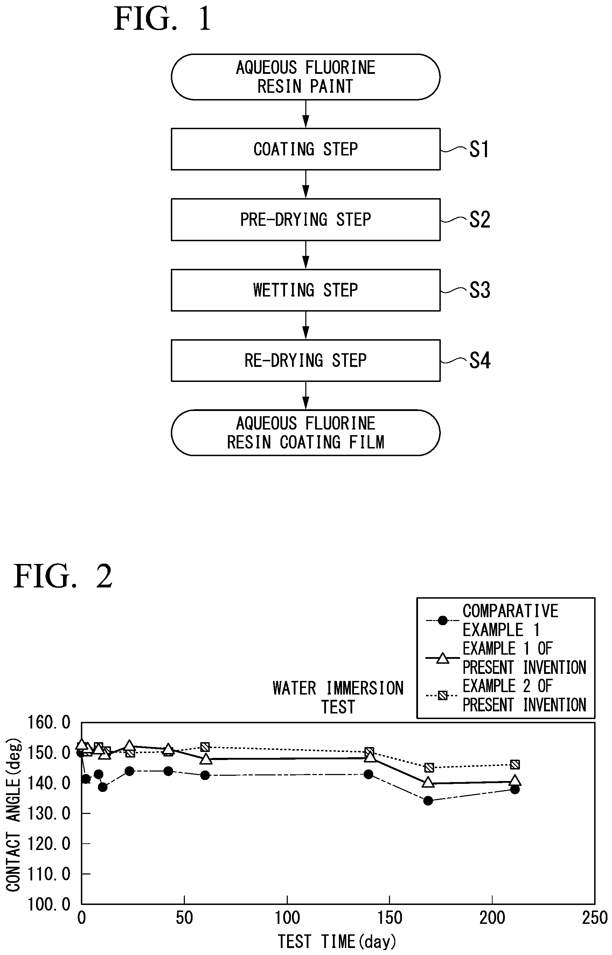

FIG. 1 is a flowchart showing steps of a method of forming an water-based fluorine resin coating film of the present embodiment. The method of forming an water-based fluorine resin coating film of the present embodiment includes a coating step S1, a pre-drying step S2, a wetting step S3, and a re-drying step S4.

The coating step S1 is performed by stirring the water-based fluorine resin paint of the present embodiment described above well, and then applying the water-based fluorine resin paint to an object to be coated to a thickness of several microns to about 1 mm by various coating methods such as spray coating, brush or roller coating, or spin coating.

In the pre-drying step S2, the water-based fluorine resin paint applied in the coating step S1 is dried to evaporate the water-based solvent, for example, water, and thus a dry coating film is formed on the object to be coated. Various drying methods such as natural drying, hot air drying, and infrared drying can be used as the drying method in the pre-drying step S2.

In the wetting step S3, the dry coating film obtained in the pre-drying step S2 is sprayed with water, for example, using a spray, and thus the dry coating film is impregnated with water to form a wet coating film. Here, in order to promote re-drying in the subsequent step, a water-soluble organic solvent, for example, a lower alcohol, can be mixed with water and sprayed.

In the re-drying step S4, water contained in the wet coating film obtained in the wetting step S3 is evaporated to obtain an water-based fluorine resin coating film. Various drying methods such as natural drying, hot air drying, and infrared drying can be used as the drying method in the re-drying step S4.

As described above, in the method of forming an water-based fluorine resin coating film of the present embodiment, the dry coating film that has been dried once is impregnated with water to form a wet coating film, which is then dried again, and thus it is possible to further improve the water repellency of the water-based fluorine resin coating film compared to a coating film that is applied and then dried once.

### [Examples]

Hereinafter, the effects of the present invention were verified using examples.

### (Verification Example 1)

As the fluorine resin powder, a tetrafluoroethylene resin powder with an average molecular weight of 8,500 and an average particle size of 1 µm was used in a weight percentage of 75%. The binder used was a vinylidene fluoride resin. As the fluorine-based oil, a perfluoropolyether with a molecular weight of 2,700 was used in a weight percentage of 2%. The titanium dioxide used was an anatase powder with an average particle size of 50 nm. The film-forming auxikiary agent was Texanol, which accounted for a weight percentage of 10% of the total solute.

The five solute components were diluted with tap water and a small amount of ethanol as the water-based solvent, and the raw materials (solutes) were gradually added and premixed and then dispersed using a bead mill to prepare an water-based fluorine resin paint of an example of the present invention. Here, as the solvent, the amount of ethanol added to tap water was a mass percentage of 1.6% of the entire paint.

In Example 1 of the present invention, the above titanium dioxide was added in a weight percentage of 0.2% relative to the total solute. In addition, in Example 2 of the present invention, the titanium dioxide was added in a weight percentage of 0.5%. In Comparative Example 1, no titanium dioxide was added.

The surface free energy of the raw materials was about 15 to 20 mN/m for the fluorine resin powder, 30 to 45 mN/m for the binder, and 15 to 20 mN/m for the fluorine oil.

For the evaluation, spraying, brushing, or roller coating was performed on an FRP plate, aluminum plate, or glass plate which was coated with an undercoat paint (urethane resin-based paint) in advance or which had no coating to prepare respective coating films (samples).

Then, these samples were exposed outdoors at a 45° installation angle facing south for 450 days.

As a result, regarding the appearance of the coating film, the sample of Comparative Example 1 containing no titanium dioxide powder had dust on the surface, and vertical rain streaks, dust left behind after water droplets had dried and the like were observed. On the other hand, in the sample of Example 1 of the present invention containing 0.2% of titanium dioxide, no dust was observed, and the initial white color of the sample was maintained. In the sample of Example 2 of the present invention containing 0.5% of titanium dioxide, self-cleaning proceeded due to the photocatalytic effect of titanium dioxide, and the color (gray) of the undercoat film was transparently visible. Table 2 shows the coating film loss amounts of these samples after exposure for 9 months, after exposure for 15 months and after exposure for 20 months.

**[Table 2]**

| | Exposure for 9 months outdoors | Exposure for 15 months outdoors | Exposure for 20 months outdoors |
|---|---|---|---|
| Comparative Example 1 | No film loss (dust adhered) | No film loss (dust adhered) | No film loss (dust adhered) |
| Example 1 of present invention | About 10 µm (1.1 µm/month) | About 17 µm (1.1 µm/month) | About 20 µm (1.0 µm/month) |
| Example 2 of present invention | About 25 µm (2.8 µm/month) | About 35 µm (2.3 µm/month) | About 40 µm (2.0 µm/month) |

In addition, the water repellency will be described below. The water contact angle is the most well-known indicator of water repellency, and the larger the angle, the higher the water repellency. The water repellency was evaluated using a contact angle meter (commercially available from Kyowa Interface Science, Inc.). About 4 µl (4×10⁻⁹ m³) of water droplets was added dropwise to the surface of the coating film of each of Examples 1 and 2 of the present invention, and Comparative Example 1, and the water contact angle was measured.

The measurement was performed at room temperature of 23°C, and the average value of five measurement points was used. The initial water contact angle was 150° or more in all of Examples 1 and 2 of the present invention, and Comparative Example 1. Therefore, no difference was observed in the initial water repellency between Examples 1 and 2 of the present invention, and Comparative Example 1.

The water contact angles of each sample after 15 months and after 20 months are shown below.

### [After 15 months]

### Comparative Example 1: contact angle 108°

### Example 1 of the present invention: contact angle 154°

### Example 2 of the present invention: contact angle 154°

### [After 20 months]

### Comparative Example 1: contact angle 110°

### Example 1 of the present invention: contact angle 152°

### Example 2 of the present invention: contact angle 151°

Based on the above results, it was confirmed that the water-based fluorine resin coating film of the present invention had antifouling properties and the effect of preventing water repellency from deteriorating over time.

### (Verification Example 2)

The coating film of each sample used in Verification Example 1 was immersed in pure water, and taken out at each test time, and the water contact angle was measured. This operation was repeated, and the effect of immersion in water for a long period was evaluated. The results are shown in FIG. 2. That is, FIG. 2 is a graph showing the results of deterioration of water repellency over time due to immersion in water. In

FIG. 2, the horizontal axis represents the number of days of immersion in water (days), and the vertical axis represents the water contact angle (degrees).

As shown in FIG. 2, it was confirmed that the coating films of Examples 1 and 2 of the present invention contained a hydrophilic titanium dioxide powder, but like the coating film of Comparative Example 1, they had little deterioration of water repellency over time, and had long-term durability against water.

### (Verification Example 3)

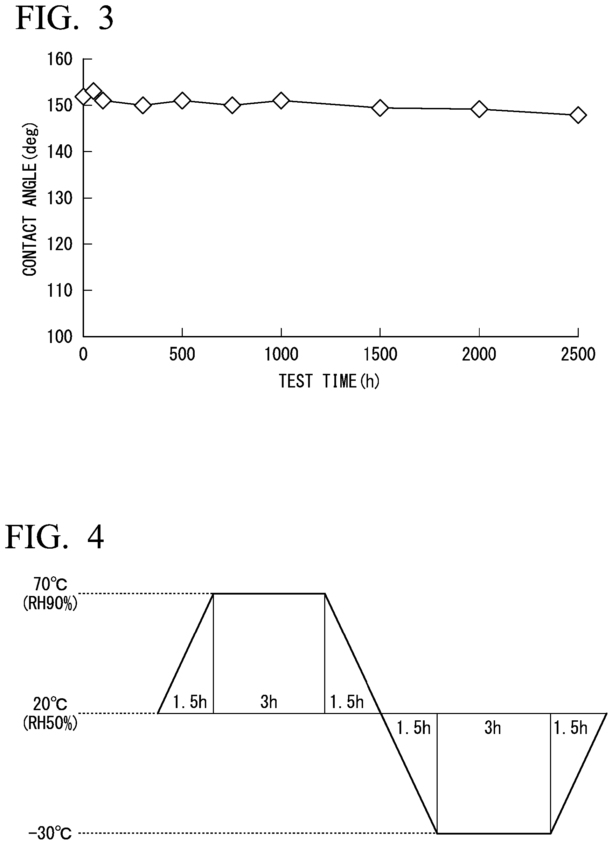

The coating film of the sample of Example 1 of the present invention used in Verification Example 1 was continuously irradiated with ultraviolet rays and taken out at each test time, and the water contact angle was measured. This operation was repeated, and the effect of exposure to ultraviolet rays for a long period was evaluated. The test conditions are shown in Table 3, and the results are shown in FIG. 3.

**[Table 3]**

| Operating conditions (according to JIS K 5400) | |
|---|---|
| Sample surface irradiance | 255 w/m² |
| Discharge voltage | 48 to 52 V |
| Discharge current | 58 to 62 A |
| Glass filter usage time | 2,000 h |
| Black panel temperature | 63±3°C |
| Water injection condition | 18 min/2 h |
| Relative humidity | 50±5% |

According to the results shown in FIG. 3, even after ultraviolet rays were emitted for 2,500 hours (about 3 years), the water contact angle was maintained at 140° or more. Therefore, it was confirmed that the water-based fluorine resin coating film of the present invention had the effect of preventing deterioration (water repellency) due to ultraviolet rays.

### (Verification Example 4)

The coating film of the sample of Example 1 of the present invention used in Verification Example 1 was subjected to 0 to 100 cooling and heating cycles shown in FIG. 4, and the water contact angle was measured at 0, 12, 24, 64, and 100 cycles. The results are shown in Table 4.

**[Table 4]**

| Test period (cycles) | Contact angle (deg) |
|---|---|
| 0 | 152 |
| 12 | 150 |
| 24 | 150 |
| 64 | 150 |
| 100 | 149 |

According to the results shown in Table 4, even after 100 cooling and heating cycles from -30°C to 70°C were repeated, in the coating film of the sample of Example 1 of the present invention, the water contact angle hardly decreased. The weather resistance of the water-based fluorine resin coating film of the present invention was confirmed.

### INDUSTRIAL APPLICABILITY

The water-based fluorine resin paint of the present invention contains a fluorine resin powder dispersed in a binder and further contains titanium dioxide having a photocatalytic effect. Since the water-based fluorine resin coating film formed using such an water-based fluorine resin paint has water repellency, it can be applied to and used for many articles for which water repellency and snow accretion resistance/ice accretion resistance are required. Examples of articles for which water repellency is required include rain gear such as an umbrella, and examples of articles for which snow accretion resistance/ice accretion resistance are required include roofs of buildings in heavy snow areas, and wireless communication antennas. **In** addition, since the present invention contains titanium dioxide having a photocatalytic effect, it can be used not only for applications requiring water repellency, and snow accretion resistance/ice accretion resistance, but also in fields in which dust resistance, air purification, antibacterial properties, and deodorizing properties are required for nitrogen oxide-containing exhaust gases, powder dust, sand dust, cigarette tar and the like. Since these coating films have a photodecomposition effect not only for sunlight but also for indoor fluorescent lamps, they can be applied to any object outdoors as well as indoors. Therefore, they have industrial applicability.

## Claims

1. An water-based fluorine resin paint comprising a solute containing a fluorine resin powder, a binder, a fluorine-based oil, titanium dioxide, and a film-forming auxikiary agent and an water-based solvent containing at least one of water and a water-soluble organic solvent.

2. The water-based fluorine resin paint according to claim 1,
wherein the film-forming auxikiary agent includes 2,2,4-trimethyl-1,3-pentanediol 1-isobutyrate.

3. The water-based fluorine resin paint according to claim 1 or 2,
wherein the titanium dioxide has an anatase crystal form or a rutile crystal form having a photocatalytic effect.

4. The water-based fluorine resin paint according to claim 1 or 2,
wherein the fluorine-based oil contains at least one of a perfluoropolyether, a perfluoroalkyl polyether, and a trifluoroethylene polymer.

5. The water-based fluorine resin paint according to claim 1 or 2,
wherein the fluorine resin powder has terminal groups that are partially or completely fluorinated.

6. The water-based fluorine resin paint according to claim 1 or 2,
wherein the fluorine resin powder includes one, two or more powders selected from the group consisting of a tetrafluoroethylene resin powder, a tetrafluoroethylene-hexafluoropropylene copolymer resin powder, and a polyvinyl fluoride resin powder.

7. The water-based fluorine resin paint according to claim 1 or 2,
wherein the binder contains at least one of an emulsion-based fluoroethylene and a vinyl ether resin.

8. The water-based fluorine resin paint according to claim 1 or 2,
wherein the fluorine-based oil is a material having a larger surface free energy than the fluorine resin powder.

9. An water-based fluorine resin coating film which is a coating film containing a fluorine resin powder, a binder, a fluorine-based oil, titanium dioxide, and a film-forming auxikiary agent.

10. The water-based fluorine resin coating film according to claim 9,
wherein the film-forming auxikiary agent includes 2,2,4-trimethyl-1,3-pentanediol 1-isobutyrate.

11. The water-based fluorine resin coating film according to claim 9 or 10,
wherein the titanium dioxide has an anatase crystal form or a rutile crystal form having a photocatalytic effect.

12. The water-based fluorine resin coating film according to claim 9 or 10,
wherein the fluorine-based oil contains at least one of a perfluoropolyether, a perfluoroalkyl polyether, and a trifluoroethylene polymer.

13. The water-based fluorine resin coating film according to claim 9 or 10,
wherein the fluorine resin powder has terminal groups that are partially or completely fluorinated.

14. The water-based fluorine resin coating film according to claim 9 or 10,
wherein the fluorine resin powder includes one, two or more powders selected from the group consisting of a tetrafluoroethylene resin powder, a tetrafluoroethylene-hexafluoropropylene copolymer resin powder, and a polyvinyl fluoride resin powder.

15. The water-based fluorine resin coating film according to claim 9 or 10,
wherein the binder contains at least one of an emulsion-based fluoroethylene and a vinyl ether resin.

16. The water-based fluorine resin coating film according to claim 9 or 10,
wherein the fluorine-based oil is a material having a larger surface free energy than the fluorine resin powder.

17. A method of forming an water-based fluorine resin coating film using the water-based fluorine resin paint according to claim 1 or 2, comprising:
a coating step in which the water-based fluorine resin paint is applied to an object to be coated;
a pre-drying step in which the solvent contained in the applied water-based fluorine resin paint is evaporated to form a dry coating film;
a wetting step in which the dry coating film is impregnated with water to form a wet coating film; and
a re-drying step in which the water contained in the wet coating film is evaporated to obtain an water-based fluorine resin coating film.
